## Europäisches Patentamt

(19) **European Patent Office**

**Office européen des brevets**

(11) Veröffentlichungsnummer: **0 182 949**
**B1**

(12) **EUROPÄISCHE PATENTSCHRIFT**

(45) Veröffentlichungstag der Patentschrift:
**08.02.89**

(51) Int. Cl.⁴: **B 27 N 3/00,** B 27 G 3/00,
F 23 G 7/00

(21) Anmeldenummer: **84730126.4**

(22) Anmeldetag: **28.11.84**

(54) Verfahren zur Herstellung von Platten oder Formteilen aus lignozellulosehaltigen Fasern.

(43) Veröffentlichungstag der Anmeldung:
**04.06.86 Patentblatt 86/23**

(45) Bekanntmachung des Hinweises auf die Patenterteilung:
**08.02.89 Patentblatt 89/6**

(84) Benannte Vertragsstaaten:
**AT BE CH DE FR GB IT LI**

(56) Entgegenhaltungen:
**EP-A- 0 044 063**
**DE-B- 1 221 437**
**GB-A- 1 131 169**
**US-A- 4 240 785**

(73) Patentinhaber: **Piasecki, Bernd, Wielandstrasse 31,
D-1000 Berlin 12 (DE)**

(72) Erfinder: **Winkler, Hermann, Zappenburg 3a,
D-3177 Sassenburg (DE)**

(74) Vertreter: **Meinig, Karl-Heinz, Dipl.-Phys. et al,
PATENTANWÄLTE PFENNING MEINIG & PARTNER
Kurfürstendamm 170, D-1000 Berlin 15 (DE)**

ACTORUM AG

## Beschreibung

Die Erfindung betrifft ein Verfahren nach dem Oberbegriff des Anspruchs 1.

In der holzverarbeitenden Industrie, beispielsweise der Möbelindustrie, werden zunehmend sogenannte MDF (medium density fiberboard)-Platten, d.h. mittelharte Faserplatten verwendet, die den Spanplatten in vielerlei Hinsicht überlegen sind. Diese Faserplatten werden aus Holz oder anderen lignozellulosehaltigen Materialien hergestellt, wobei diese in Fasern aufgespalten und dann mit einem Bindemittel beleimt werden. Aufgrund der Zerfaserung des Ausgangsmaterials ist dessen Struktur in der fertigen Faserplatte nicht mehr feststellbar, so dass die Faserplatte eine homogene Struktur aufweist. Es treten somit keine Dichteschwankungen in der Platte auf und diese kann mechanisch in der Weise bearbeitet werden, dass die hierbei behandelten Kanten einen glatten Verlauf und keine Unregelmässigkeiten bzw. Unebenheiten zeigen, wie dies beispielsweise bei Spanplatten aufgrund deren inhomogener Struktur der Fall ist. Die Oberflächen sind glatt und weisen keine Härteschwankungen auf.

Bei der Herstellung von Holzfaserplatten wird grundsätzlich ein lignoszellulosehaltiges Rohmaterial, z.B. Holzspäne, zunächst beispielsweise durch Wasserdampf aufgeweicht und dann mechanisch zu einer feuchten Fasermasse zerkleinert. Abhängig von der weiteren Verarbeitung unterscheidet man zwischen Nass-, Halbtrocken- und Trockenverfahren.

Beim Nassverfahren wird die feuchte Fasermasse in Wasser zu einer dünnflüssigen Aufbereitung suspendiert, aus welcher die Fasern auf einer Langsiebmaschine zu einer ebenen Fasermatte abgelagert werden. Die Fasermatte wird dann in sogenannte Nassbogen aufgeteilt, die bei hoher Temperatur und unter hohem Druck zu steifen, trockenen Faserplatten gepresst werden. Durch mechanische Wasserauspressung wird der Wassergehalt zunächst auf etwa 50% und anschliessend durch Verdampfen bei niedrigerem Druck auf nahezu Null herabgesetzt. Um Faserplatten mit einer relativ geringen Dichte zu erhalten, muss jedoch der Trocknungsprozess durch Verdampfen schon bei einem Wassergehalt von mehr als 60% einsetzen, so dass für die Plattenherstellung erhebliche Energiemengen benötigt werden.

Aus der DE-AS 2 120 936 ist ein Verfahren zur Herstellung und Aufbereitung von Fasern aus lignozellulosehaltigem Material im Zuge der Herstellung von Faserplatten nach dem Halbtrockenverfahren bekannt, bei dem das Material aufgeweicht und zu einer feuchten Fasermasse zerkleinert wird, die in einem Gas dispergiert und aus der anschliessend eine Faserbahn gebildet wird. Dabei können die dispergierten Fasern bei praktisch unverändertem Feuchtigkeitsgehalt in Form einer Faserbahn oder -matte abgelagert werden. Jedoch ist es hier aufgrund des ungleichmässigen Feuchtigkeitsgehalts der Fasermasse schwierig, eine Faserbahn mit über die gesamte Fläche des trockenen Materials einheitlichem Flächengewicht zu erhalten, da der Packungs- bzw. Verdichtungsgrad der Masse von dem örtlich schwankenden Feuchtigkeitsgehalt abhängt. Um diesen Nachteil zu vermeiden, ist aus der DE-AS 2 120 936 bekannt, das lignozellulosehaltige Material vor der Formung der Faserbahn einer mechanischen Wasserauspressung zu unterwerfen. Obwohl hierdurch die Schwankungen im Feuchtigkeitsgehalt erheblich reduziert werden, liegt dieser selbst jedoch immer noch bei etwa 50%. Somit werden auch hier für den nachfolgenden Trocknungsvorgang beträchtliche Energiemengen benötigt.

Beim Trockenverfahren wird die feuchte Fasermasse bereits bis auf einen Feuchtigkeitsgehalt von etwa 10% vorgetrocknet, bevor die Fasern in einem Gas dispergiert und dann als Faservlies abgelagert werden. Dieses Vlies wird dann in sogenannte Trockenbögen unterteilt, die bei hoher Temperatur und unter hohem Druck zu steifen, trockenen Faserplatten verpresst werden. Es wird bei diesem Verfahren somit praktisch die gesamte Feuchtigkeitsmenge in der Fasermasse durch Trocknung entzogen, so dass auch hier für die Plattenherstellung erhebliche Energiemengen erforderlich sind. Aus der DE-PS 1 084 017 ist ein Verfahren zur Herstellung von Formkörpern, wie Behältern, Möbelteilen und dergleichen, aus einer im Trockenverfahren gewonnenen Holzfasermasse mit beschränktem Bindemittelgehalt bekannt, bei dem die in die Form geblasene Mischung vor dem Pressgang einer feuchten Heizdampfbehandlung unterworfen wird, bis sie einen Feuchtigkeitsgehalt von etwa 20 bis 30 Gewichts-% und eine Temperatur von etwa 95 bis 120°C aufweist. Diese zusätzliche Feuchtigkeitsbehandlung und der damit verbundene Trocknungsprozess führen naturgemäss zu einem weiteren Anstieg des Energiebedarfs.

Alle drei genannten Verfahren zur Herstellung von Faserplatten zeichnen sich somit durch einen ausserordentlichen Energiebedarf aus. Da diese Energie von aussen zugeführt werden muss, beeinflusst sie die Herstellungskosten der Faserplatten in erheblichem Masse.

Es ist daher die Aufgabe der vorliegenden Erfindung, ein Verfahren zur Herstellung von Platten oder Formteilen im wesentlichen aus lignozellulosehaltigen Fasern, bei dem Holz zerspant, die Holzspäne zerfasert und mit einer Beleimung versehen werden, anschliessend eine Fasermatte gebildet und diese zu einer Platte oder einem Formteil verpresst wird, in der Weise durchzuführen, dass die dem Herstellungsprozess von aussen zuführbare Energie beträchtlich reduziert wird oder sogar vollständig auf diese verzichtet werden kann.

Diese Aufgabe wird erfindungsgemäss gelöst durch die im kennzeichnenden Teil des Anspruchs 1 enthaltenen Verfahrensmerkmale. Vorteilhafte Ausgestaltungen dieses Verfahrens ergeben sich aus den Unteransprüchen.

Bei dem vorliegenden Verfahren werden die bei der Holzzerspanung erzeugten, für die Zerfaserung ungeeigneten bzw. weniger geeigneten Holzpartikel von den für die Zerfaserung geeigneten Holzspänen getrennt und die für die Zerfaserung ungeeigneten bzw. weniger geeigneten Holzpartikel zur Erzeugung der für die bei der Zerfaserung und/oder Pressung benötigten Wärme verwendet, wobei die Einteilung in die beiden Kategorien «geeignet» und «weniger geeignet» entsprechend dem Energiebedarf vorgenommen wird.

Vorzugsweise wird zur Herstellung der Späne bzw. Fasern trockenes Altholz verwendet. Altholz ist im Normalfall wesentlich trockener als Frischholz. Es fallen daher bei der Zerspanung von Altholz wesentlich mehr für die Zerfaserung ungeeignete Holzpartikel und Holzstaub an als bei der Zerspanung von Frischholz. Die für die Zerfaserung geeigneten Holzspäne sollen eine Mindestlänge von 30 mm und eine Mindestdicke von 4 mm aufweisen. Um daher bei Verwendung von Altholz Faserplatten mit ausreichender Festigkeit zu erhalten, musste bisher der Anteil an Bindemittel in der Faserplatte sehr hoch sein. Dies wiederum führte zu einer Verteuerung der Faserplatten, so dass Altholz zu diesem Zweck bisher nur in geringem Umfang eingesetzt wurde. Durch die Trennung des zerspanten Holzes in für die Zerfaserung geeignete Späne und in für die Zerfaserung ungeeignete Holzpartikel ist dieser Nachteil bei der Verwendung von Altholz beim vorliegenden Verfahren jedoch nicht mehr gegeben. Das Altholz hat hier vielmehr den Vorteil, dass es mehr Verbrennungsenergie pro Gewichtseinheit liefert als das feuchtere Frischholz. Das vorliegende Verfahren führt somit zu einer wirtschaftlichen Verwendung von Altholz für die Herstellung von Faserplatten.

Die Trennung der ungeeigneten von den für die Zerfaserung geeigneten Holzspänen erfolgt vorzugsweise mittels eines Sieb-Sicht-Mahlverfahrens. Um den Energiebedarf des Herstellungsprozesses für Faserplatten vollständig durch die Verbrennung von bei der Holzzerspanung anfallenden Holzpartikel zu dekken, empfiehlt es sich, das Mengenverhältnis der für die Zerfaserung geeigneten Späne zu den hierfür ungeeigneten Holzpartikeln 2 : 1 zu wählen. Durch die Verbrennung der für die Zerfaserung ungeeigneten Holzpartikel wird vorteilhaft überhitzter Dampf erzeugt, der zum Antrieb eines Dampfmotors für die Zerfaserungsvorrichtung verwendet wird. Der Abdampf des Dampfmotors kann zur Behandlung der Holzspäne vor der Zerfaserung verwendet werden. Es kann jedoch auch durch die Verbrennung der für die Zerfaserung ungeeigneten Holzpartikel erzeugte Dampf direkt zur Behandlung der Holzspäne vor der Zerfaserung eingesetzt werden. Weiterhin wird der Abdampf des Dampfmotors vorzugsweise zur Erhitzung von zur Trocknung der Fasern vor der Beleimung dienender Luft verwendet. Hierbei kann die Luft zusätzlich durch bei der Verbrennung der Holzpartikel erzeugten Heissdampf oder erzeugtes Heisswasser erhitzt werden. Auch die zum Pressen der Fasermatte benötigte Wärme wird vorteilhaft mit Hilfe von bei der Verbrennung der für die Zerfaserung ungeeigneten Holzpartikel erzeugtem Heissdampf oder Heisswasser zugeführt. Etwaige durch die Verbrennung der Holzpartikel erzeugte, für die Herstellung der Platten oder Formteile nicht benötigte Wärme wird bevorzugt zur Speisung weiterer Verbraucher verwendet.

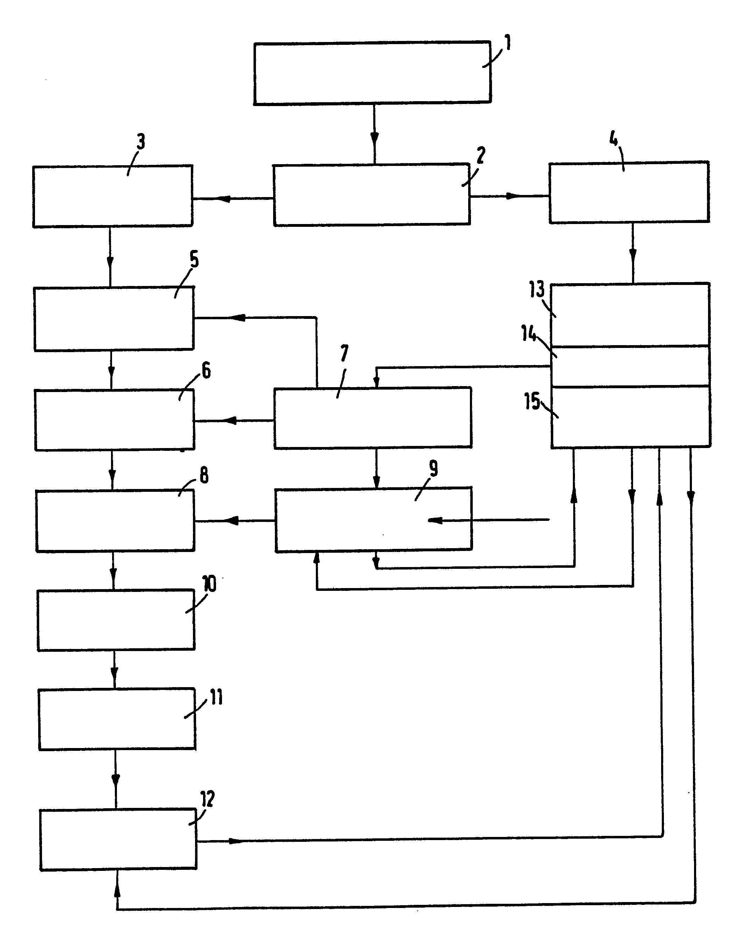

Die Erfindung wird im folgenden anhand eines in der Figur dargestellten Ausführungsbeispiels näher erläutert. Die Figur zeigt eine zur Durchführung des vorliegenden Verfahrens geeignete Vorrichtung, deren einzelne Teile in Blockform dargestellt sind. Diese Vorrichtung arbeitet nach dem vorbeschriebenen Trockenverfahren. Das erfindungsgemässe Verfahren ist jedoch nicht hierauf beschränkt.

In einer Zerspanungsvorrichtung 1 wird möglichst trockenes und einen hohen Heizwert aufweisendes Altholz in der Weise zerspant, dass etwa zwei Drittel der Holzmenge aus Spänen mit einer Mindestlänge von 30 mm und einer Mindestdicke von 4 mm und die restliche Holzmenge aus kleineren Spänen oder Holzstaub bestehen. Das zespante Holz wird anschliessend einer Sieb-Sicht-Mahlstation 2 zugeführt, in der die Späne mit einer Mindestlänge von 30 mm und einer Mindestdicke von 4 mm von den übrigen Holzpartikeln getrennt werden. Die Späne mit den genannten Mindestwerten für Länge und Dicke sind besonders gut für eine Zerfaserung geeignet und werden in einen Sammelbehälter 3 gebracht. In entsprechender Weise werden die kleineren Holzpartikel in einen Sammelbehälter 4 befördert. Im Sammelbehälter 3 befinden sich somit die Holzspäne, die nachfolgend zerfasert werden und das Grundmaterial für die herzustellenden Faserplatten bilden, während sich im Sammelbehälter 3 die kleineren Späne und Holzstaub befinden, die anschliessend zur Energieerzeugung verbrannt werden. Im Sammelbehälter 4 befinden sich auch etwaige Verunreinigungen, die in der Sieb-Sicht-Mahlstation 2 von den grösseren Spänen getrennt wurden, so dass das Ausgangsmaterial für die Fasern weitgehend von Verunreinigungen frei ist.

An den Sammelbehälter 3 ist ein Holzspankocher 5 angeschlossen, dem die Holzspäne aus dem Sammelbehälter 3 und in noch zu beschreibender Weise Wasserdampf zugeführt werden. Die durch den Wasserdampf aufgeweichten Holzspäne werden in eine Zerfaserungsvorrichtung 6 gebracht, in der sie beispielsweise zwischen rotierenden Scheiben zu einer feuchten Fasermasse zermahlen werden. Zum Antrieb der Scheiben in der Zerfaserungsvorrichtung 6 wird ein Dampfmotor 7 verwendet. Dieser wird in ebenfalls noch zu beschreibender Weise durch überhitzten Dampf betrieben. Die Fasermasse wird dann aus der Zerfaserungsvorrichtung in einen Faser-Trockner 8 überführt, in dem die Fasern in erhitzter Luft bei etwa 180 bis 200°C getrocknet werden. Die erhitzte Luft wird aus einem Lufterhitzer 9 zugeführt. Nachdem die Fasern getrocknet sind, werden sie in eine Beleimungsvorrichtung 10 transportiert. In dieser wird den Fasern in bekannter Weise ein Bindemittel zugesetzt. Das Gemisch aus Holzfasern und Bindemittel wird dann vorzugsweise auf pneumatischem Wege in eine Mattenbildungsvorrichtung 11 transportiert. Diese kann in bekannter Weise ein sich bewegendes, gitterartiges Band enthalten, auf dem sich die Fasermatte bildet. Durch einen unterhalb des Bandes erzeugten Unterdruck wird die Transportluft abgeführt und die Mattenhöhe herabgesetzt. Die Faserverteilung auf dem Band und die Fasermattenbildung werden somit durch Luftströme vorgegebener Richtung und Stärke gesteuert. Die auf dem Band gebildete Matte besitzt eine erhebliche Höhe; so beträgt die Höhe der Fasermatte für eine Faserplatte mit einer Enddicke von 19 mm etwa 500 mm. Es findet daher vorzugsweise eine Vorpressung auf etwa das Fünf- bis Zehnfache der endgültigen Dicke statt, bevor der eigentliche Pressvorgang durchgeführt wird. Dieser findet in einer beheizten Etagenpresse 12 statt. Hierzu wird der Etagenpresse 12 Heissdampf oder Heisswasser zugeführt, der bzw. das in noch zu beschreibender Weise erzeugt wird.

Die im Sammelbehälter 4 befindlichen Holzpartikel werden in eine Verbrennungskammer 13 gebracht, und die in dieser erhaltene Wärme wird zur Erzeugung von überhitztem Dampf in einem Dampferzeuger 14 sowie von Dampf oder Heisswasser in einer Heizkammer 15 verwendet. Der überhitzte Dampf, der eine Temperatur von etwa 380°C besitzt, dient zum Antrieb des Dampfmotors 7. Der Abdampf dieses Motors wird zum einen dem Holzspankocher 5 und zum anderen dem Lufterhitzer 9 zugeführt. Im Lufterhitzer 9 dient der Abdampf des Dampfmotors 7 zur Vorerwärmung von der Umgebung entnommener Luft. Der Dampf oder das Heisswasser aus der Heizkammer 15 wird zum Lufterhitzer 9 geführt, um die Luft auf die vorgegebene Temperatur zu erwärmen. Die Temperatur und/oder Menge des aus der Heizkammer 15 kommenden Dampfes oder Heizwassers ist regelbar, um eine vorgegebene Endfeuchte der Fasern im Faser-Trockner 8 zu erhalten. Das im Lufterhitzer 9 anfallende Kondensationswasser wird in die Heizkammer 15 zurückgeführt und dort wieder für die Erzeugung von Dampf bzw. Heisswasser verwendet.

Auch zur Etagenpresse 12 wird Dampf oder Heisswasser aus der Heizkammer 15 geliefert. Dieser bzw. dieses wird in bekannter Weise zum Betrieb der Etagenpresse 12 verwendet. Auch hier wird das in der Etagenpresse 12 anfallende Wasser wieder zur erneuten Verwendung in die Heizkammer 15 zurückgeführt.

Es ergibt sich somit eine Anlage zur Herstellung von Faserplatten, bei der die benötigte Energie aus dem Prozess selbst gewonnen wird und die somit von Fremdenergie unabhängig ist. Sollte die bei der Verbrennung der ausgesonderten Holzpartikel erzeugte Energie so gross sein, dass sie teilweise für die Herstellung der Faserplatten nicht benötigt wird, so können noch weitere Energieverbraucher von der gezeigten Anlage gespeist werden.

Schliesslich wird noch darauf hingewiesen, dass es für die Energiebilanz besonders vorteilhaft ist, die bei der Erzeugung des Heissdampfes anfallenden Rauchgase mit einer Temperatur von bis zu 300°C vollständig oder zumindest teilweise dem Trockner zuzuführen anstelle der Verwendung kalter Umluft.

**Patentansprüche**

1. Verfahren zur Herstellung von Platten oder Formteilen aus im wesentlichen lignozellulosehaltigen Fasern, bei dem Holz zerspant, die Holzspäne zerfasert und mit einer Beleimung versehen werden, anschliessend eine Fasermatte gebildet und diese zu einer Platte oder einem Formteil verpresst wird, dadurch gekennzeichnet, dass die bei der Holzzerspanung erzeugten, für die Zerfaserung ungeeigneten bzw. weniger geeigneten Holzpartikel von den für die Zerfaserung geeigneten Holzspänen getrennt werden und dass die für die Zerfaserung ungeeigneten bzw. weniger geeigneten Holzpartikel zur Erzeugung der für die bei der Herstellung der Platten oder Formteile benötigten Wärme verwendet werden, wobei die Einteilung in die beiden Kategorien «geeignet» und «weniger geeignet» entsprechend dem Energiebedarf vorgenommen wird.

2. Verfahren nach Anspruch 1, dadurch gekennzeichnet, dass zur Herstellung der Späne bzw. Fasern trockenes Altholz verwendet wird.

3. Verfahren nach Anspruch 1 oder 2, dadurch gekennzeichnet, dass die Trennung der ungeeigneten von den für die Zerfaserung geeigneten Holzspänen mittels eines Sieb-Sicht-Mahlverfahrens erfolgt.

4. Verfahren nach einem der Ansprüche 1 bis 3, dadurch gekennzeichnet, dass für die für die Zerfaserung geeigneten Holzspäne eine Mindestlänge von 30 mm und eine Mindestdicke von 4 mm gewählt wird.

5. Verfahren nach einem der Ansprüche 1 bis 3, dadurch gekennzeichnet, dass das Mengenverhältnis der für die Zerfaserung geeigneten Späne zu den hierfür ungeeigneten Holzpartikeln 2 : 1 gewählt wird.

6. Verfahren nach einem der Ansprüche 1 bis 5, dadurch gekennzeichnet, dass durch Verbrennung der für die Zerfaserung ungeeigneten Holzpartikel überhitzter Dampf erzeugt wird, der zum Antrieb eines Dampfmotors für die Zerfaserungsvorrichtung verwendet wird.

7. Verfahren nach Anspruch 6, dadurch gekennzeichnet, dass der überhitzte Dampf auf eine Temperatur von etwa 380°C gebracht wird.

8. Verfahren nach Anspruch 6 oder 7, dadurch gekennzeichnet, dass der Abdampf des Dampfmotors zur Behandlung der Holzspäne vor der Zerfaserung verwendet wird.

9. Verfahren nach einem der Ansprüche 1 bis 7, dadurch gekennzeichnet, dass durch Verbrennung der für die Zerfaserung ungeeigneten Holzpartikel erzeugter Dampf direkt zur Behandlung der Holzspäne vor der Zerfaserung verwendet wird.

10. Verfahren nach einem der Ansprüche 6 bis 9, dadurch gekennzeichnet, dass der Abdampf des Dampfmotors zur Erhitzung von zur Trocknung der Fasern vor der Beleimung dienender Luft verwendet wird.

11. Verfahren nach Anspruch 10, dadurch gekennzeichnet, dass die Luft zusätzlich durch bei der Verbrennung der für die Zerfaserung ungeeigneten Holzpartikel erzeugten Dampf oder erzeugtes Heisswasser erhitzt wird.

12. Verfahren nach einem der Ansprüche 1 bis 11, dadurch gekennzeichnet, dass die zum Pressen der Fasermatte benötigte Wärme mit Hilfe von bei der Verbrennung der für die Zerfaserung ungeeigneten Holzpartikel erzeugtem Dampf oder Heizwasser zugeführt wird.

13. Verfahren nach einem der Ansprüche 1 bis 12, dadurch gekennzeichnet, dass durch Verbrennung der für die Zerfaserung ungeeigneten Holzpartikel erzeugte, für die Herstellung der Platten oder Formteile nicht benötigte Wärme zur Speisung weiterer Verbraucher verwendet wird.

**Claims**

1. Method for making boards or articles essentially from lignocellulosic fibres, wherein wood is reduced to chips, the wood chips are pulped and a size applied, thereafter a fibre mat is formed and said mat is pressed to a board or article, characterised in that the wood particles produced in chip production that are unsuitable or less suitable for pulping are separated from the wood chips that are suitable for pulping and that the wood particles that are unsuitable or less suitable for pulping are used to generate the heat required in making the boards or articles, the classification into the two categories «suitable» and «less suitable» being made on the basis of energy requirement.

2. Method according to Claim 1, characterised by using dry salvaged timber to make the chops and fibres.

3. Method according to Claim 1 or 2, characterised by separating the wood chips that are unsuitable for pulping from those that are suitable by a screening, separating and grinding process.

4. Method according to one of Claims 1 to 3, characterised by selecting a minimum length of 30 mm and a minimum thickness of 4 mm for the wood chips that are suitable for pulping.

5. Method according to one of Claims 1 to 3, characterised by selecting the ratio of suitable chips for pulping to wood particles unsuitable therefor to be 2 : 1.

6. Method according to one of Claims 1 to 5, characterised by producing superheated steam by burning the wood particles that are unsuitable for pulping, said steam being used to drive a steam motor for the pulping machine.

7. Method according to Claim 6, characterised by bringing the superheated steam to a temperature of about 380°C.

8. Method according to Claim 6 or 7, characterised by using the exhaust steam from the steam motor to treat the wood chips before pulping.

9. Method according to one of Claims 1 to 7, characterised in that steam generated by burning the wood particles that are unsuitable for pulping is used directly to treat the wood chips before pulping.

10. Method according to one of Claims 6 to 9, characterised by using the exhaust steam from the steam motor to heat air serving to dry the fibres before they are sized.

11. Method according to Claim 10, characterised in that the air is additionally heated by steam or hot water produced when the wood particles unsuitable for pulping are burnt.

12. Method according to one of Claims 1 to 11, characterised in that the heat required to press the fibre mat is supplied with the aid of steam or hot water produced when the wood particles unsuitable for pulping are burnt.

13. Method according to one of Claims 1 to 12, characterised by using heat that is generated by burning the wood particles unsuitable for pulping and is not required for making the boards or articles to supply further consumers.

**Revendications**

1. Procédé de fabrication de panneaux ou de pièces moulées à partir de fibres d'un matériau essentiellement lignocellulosique, au cours duquel du bois est fractionné en copeaux, les copeaux sont fractionnés en fibres, lesquelles sont enrobées dans un liant, puis un mat de fibres est formé et ensuite comprimé pour obtenir un panneau ou un profilé, caractérisé par le fait que les particules de bois, qui sont obtenues lors du fractionnement en copeaux et qui se prêtent peu ou ne se prêtent pas au fractionnement en fibres sont séparées des particules de bois qui se prêtent au fractionnement en fibres, et que les particules de bois qui se prêtent peu ou ne se prêtent pas au fractionnement en fibres sont utilisées pour produire la chaleur nécessaire à la fabrication des panneaux ou des profilés, la répartition en particules «se prêtent» au fractionnement en fibres et en particules «se prêtent peu» au fractionnement en fibres étant effectuée en fonction des besoins d'énergie.

2. Procédé conforme à la revendication 1, caractérisé par le fait que l'on utilise du vieux bois sec pour la production de copeaux ou de fibres.

3. Procédé conforme à la revendication 1 ou 2, caractérisé par le fait que l'on utilise une installation de criblage-tamisage-broyage pour séparer les particules qui se prêtent au fractionnement en fibres des particules qui ne se prêtent pas à un tel fractionnement.

4. Procédé conforme à l'une des revendications 1 à 3, caractérisé par le fait que l'on sélectionne comme copeaux de bois se prêtant à un fractionnement en fibres, ceux qui ont une longueur d'au moins 30 mm et une épaisseur d'au moins 4 mm.

5. Procédé conforme à l'une des revendications 1 à 3, caractérisé par le fait que le rapport: quantité de copeaux se prêtant au fractionnement en fibres/ quantité de copeaux ne se prêtant pas à ce fractionnement, qui est choisi, est 2 : 1.

6. Procédé conforme à l'une des revendications 1 à 5, caractérisé par le fait que la combustion des particules de bois qui ne se prêtent pas au fractionnement en fibres permet de produire de la vapeur, qui sert à mettre en oeuvre un moteur à vapeur utilisé par l'installation de fractionnement en fibres.

7. Procédé conforme à la revendication 6, caractérisé par le fait, que la vapeur surchauffée est portée à une température de l'ordre de 380°C.

8. Procédé conforme à la revendication 6 ou 7, caractérisé par le fait, que la vapeur d'échappement du moteur à vapeur est utilisée pour le traitement des copeaux de bois avant le fractionnement en fibres.

9. Procédé conforme à l'une des revendications 1 à 7, caractérisé par le fait que la vapeur engendrée grâce à la combustion des particules de bois impropres au fractionnement en fibres est utilisé directement pour le traitement des copeaux de bois avant le fractionnement en fibres.

10. Procédé conforme à l'une des revendications 6 à 9, caractérisé par le fait que la vapeur d'échappement du moteur à vapeur est utilisée pour réchauffer l'air de séchage des fibres avant encollage.

11. Procédé conforme à la revendication 10, caractérisé par le fait que l'air est réchauffé en outre par la vapeur ou l'eau chaude engendrées grâce à la combustion des particules de bois impropres à un fractionnement en fibres.

12. Procédé conforme à l'une des revendications 1 à 11, caractérisé par le fait que la chaleur nécessaire pour comprimer les mats de fibres est amenée par l'intermédiaire de la vapeur ou de l'eau chaude engendrées grâce à la combustion des particules de bois impropres à un fractionnement en fibres.

13. Procédé conforme à l'une des revendications 1 à 12, caractérisé par le fait que la chaleur produite grâce à la combustion des particules de bois impropres à un fractionnement en fibres peut être utilisée par d'autres consommateurs, si on n'en a pas besoin pour la fabrication des panneaux ou des profilés.